# DEMANDE DE BREVET EUROPEEN

(11) **EP 0 579 543 A1**
(43) Date de publication de la demande: **19.01.1994**
(21) Numéro de dépôt: 93401820.1
(22) Date de dépôt: 15.07.1993
(51) Int. Cl.: H02G 7/05

(54) **Pince d'ancrage pour câble électrique**

(30) Priorité: 16.07.1992 FR 9208802
(71) Demandeur: ETABLISSEMENTS DERANCOURT (Société à Responsabilité Limitée), F-66270 Le Soler (FR)
(72) Inventeur: Derancourt, Frédéric, FR-66270 LE SOLER (FR)
(74) Mandataire: Keib, Gérard

(57) **Abrégé**

La pince d'ancrage comprend un corps (2) muni d'un étrier (7) pour sa fixation à une paroi et présente un évidement axial sensiblement tronconique pour le passage d'un câble (6), l'évidement étant destiné à recevoir un noyau (4) de forme complémentaire propre à réaliser avec le corps (2) un coincement conique.

Le corps (2) est réalisé d'un seul tenant, avec un évidement ouvert axialement sur l'extérieur à la manière d'une gorge, et des moyens (14) sont prévus pour guider en rotation le noyau (4) positionné à l'intérieur du corps (2), entre une position d'ouverture dans laquelle il peut recevoir le câble (6) et une position de fermeture,

Application en particulier aux câbles de réseau en conducteurs isolés torsadés.

## Description

La présente invention concerne une pince d'ancrage pour câble électrique, en particulier pour câble torsadé réseau.

Les pinces d'ancrage connues comprennent un corps creux en matière plastique ou en aluminium présentant un évidement axial tronconique destiné au passage du câble. Ce corps creux comporte une bride du type étrier qui permet de l'accrocher à une surface telle qu'un mur.

D'autre part, ces pinces comprennent généralement un noyau en deux parties, destiné à être engagé dans l'évidement du corps creux. Ce noyau présente une surface extérieure tronconique adaptée à celle de l'évidement du corps creux, de sorte que les deux pièces réalisent ensemble un coincement conique lorsqu'on exerce une traction sur le ĉable dans une direction opposée à l'étrier d'accrochage qui retient le corps creux.

Lorsqu'il s'agit d'un câble de réseau, l'ancrage se fait non pas sur l'ensemble des conducteurs mais sur un seul brin, appelé neutre porteur.

Les pinces d'ancrage connues nécessitent l'extraction quasi complète du noyau pour la mise en place du câble. L'assemblage des différentes pièces du noyau et du corps est rendu malaisé par la nécessité de maintenir simultanément le câble dans le noyau avant qu'il ne soit serré par l'effet de coincement conique de la pince.

Le but de l'invention est de remédier à cet inconvénient en créant une pince d'ancrage pour câble électrique qui soit à la fois commode à utiliser et qui assure une fixation fiable des câbles.

L'invention vise ainsi une pince d'ancrage pour câble électrique, comprenant un corps muni d'un étrier pour sa fixation à une paroi ou analogue et présentant un évidement axial sensiblement tronconique pour le passage du câble, l'évidement étant destiné à recevoir un noyau de forme complémentaire propre à réaliser avec le corps un coincement conique.

Suivant l'invention, cette pince d'ancrage est caractérisée en ce que le corps est réalisé d'un seul tenant avec un évidement ouvert axialement sur l'extérieur à la manière d'une gorge et en ce que des moyens sont prévus pour guider en rotation le noyau positionné à l'intérieur du corps, entre une position d'ouverture dans laquelle il peut recevoir le câble et une position de fermeture.

La réalisation du corps creux en un seul tenant élimine les risques de désolidarisation de pièces encliquetées ou coulissantes, sous l'effet des efforts de traction du câble. Mais surtout, cette structure permet de placer le câble dans la pince pré-assemblée, le noyau se trouvant déjà dans le corps creux. Le noyau est amené en position de fermeture par rotation à l'intérieur du corps et non en rapportant une pièce de fermeture sur le noyau ou sur le corps. Il n'est donc pas nécessaire d'extraire le noyau du corps pour y placer le câble.

Selon une version préférée de l'invention, qui convient en particulier à l'ancrage de câbles réseau dont seul le brin neutre est inséré dans la pince, le noyau est constitué par deux mâchoires articulées.

La réalisation du noyau en deux parties solidaires, sous la forme de mâchoires articulées, évite les ajustements qui sont nécessaires à l'assemblage de deux demi-coquilles séparées. La pince est ainsi réduite à un nombre de composants limité du fait que, non seulement le corps mais également le noyau sont réalisés chacun d'un seul tenant.

Dans un mode de réalisation pratique, le noyau présente avec le corps une complémentarité de forme propre à assurer son positionnement dans le corps pour que l'ouverture des mâchoires se fasse du côté de l'ouverture axiale de l'évidement du corps.

Avantageusement, la pince d'ancrage conforme à l'invention comporte différents moyens de guidage en translation et en rotation du noyau dans la pince, propres à assurer un assemblage ainsi qu'un fonctionnement en position d'ouverture et de fermeture qui soient pratiques, la pince étant en outre d'une grande résistance mécanique. Ces particularités et d'autres avantages de l'invention apparaîtront dans la description qui va suivre.

Aux dessins annexés, données à titre d'exemples non limitatifs:
- la figure 1 est une vue en élévation du corps de la pince conforme à l'invention,
- la figure 2a est une vue en perspective du noyau, dans le sens de son introduction dans le corps de la figure 1,
- la figure 2b est une vue en perspective du noyau, ce dernier ayant été basculé de 180°, par rapport à la figure 2a, autour d'un axe perpendiculaire à son axe propre,
- les figures 3 et 4 sont des vues en perspective de la pince pré-assemblée, le noyau étant respectivement en positions d'ouverture et de fermeture sur le brin neutre d'un câble réseau en conducteurs isolés torsadés.

La pince comprend un corps 2 monobloc présentant un évidement axial sensiblement tronconique 3 destiné à recevoir un noyau 4, lequel présente un évidement axial 5 destiné au passage du brin neutre 6 du câble de réseau. Le corps 2 est muni d'un étrier 7 constitué par une câblette en inox, qui peut être accroché à un crochet saillant de la paroi ou analogue choisie pour l'ancrage du câble.

Le corps 2 est conformé comme un fourreau, avec une section transversale cylindrique, non de révolution, aplatie à la base. L'évidement 3 du corps est ouvert axialement sur l'extérieur à la manière d'une gorge, dont le fond plat et les parois incurvées confèrent au corps une section sensiblement en U. Cette section, tout comme celle du noyau 4, diminue progressivement de l'extrémité qui porte l'étrier d'accrochage 7 à l'autre extrémité du corps, de telle sorte que le noyau et le corps réalisent ensemble un coincement du type conique, qui se renforce lorsqu'on exerce une traction sur le câble dans une direction opposée à l'étrier d'accrochage.

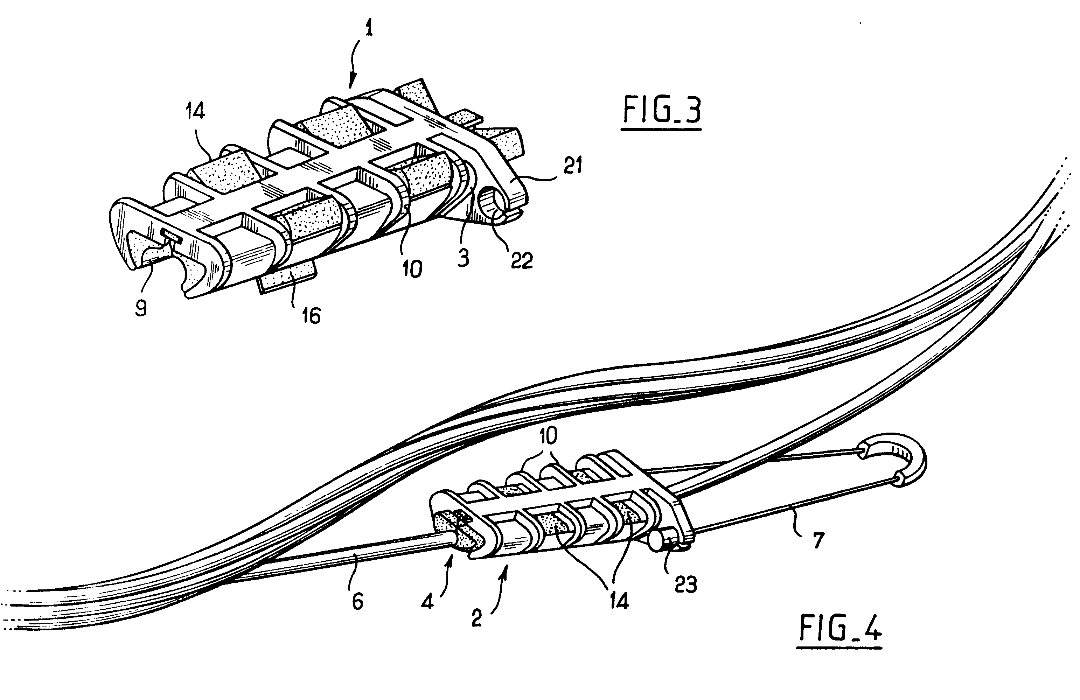

Le corps 2 présente à son extrémité la plus large, une paire d'oreillettes 21 dans chacune desquelles est ménagé un orifice 22 pour le passage des branches de l'étrier 7, comme représenté à la figure 4. Des embouts métalliques 23 venant en butée contre les oreillettes 21 retiennent les branches de l'étrier 7.

La surface extérieure du corps 2 présente des nervures radiales 10 dont la fonction est double: elles augmentent la rigidité des parois du corps et leur résistance aux efforts de traction du câble qui se traduisent par une forte pression du noyau dans le corps et une tendance à l'écartement des parois latérales du corps. Les nervures 10 assurent d'autre part une bonne prise manuelle lors de l'assemblage de la pince, de sa fixation sur le câble et de son accrochage.

Le noyau 4, de forme adaptée pour coulisser dans l'évidement 3 du corps, est constitué par deux mâchoires 8 articulées par une charnière axiale 9 prévue sur la surface extérieure de la base aplatie 11. Cette charnière 9 est destinée à coopérer, à la manière d'un coulisseau, avec une rainure axiale 12 ménagée dans le fond plat de l'évidement 3 du corps 2. La charnière 9 et la rainure 12, associées à la complémentarité de forme du noyau 4 et du corps 2, permettent de guider le noyau en translation dans le corps en assurant son positionnement correct pour que les mâchoires 8 s'ouvrent du côté de l'ouverture axiale de l'évidement 3. La glissière axiale constitue également l'axe fixe autour duquel pivotent les mâchoires 8 lorsqu'elles sont actionnées en position d'ouverture ou de fermeture.

Cet actionnement est opéré au moyen de deux organes de préhension en forme d'ailettes 16, dont sont munies les mâchoires 8 sur leur face opposée à la charnière 9. Une fois le noyau 4 positionné dans le corps 2, les ailettes 16 font saillie des parois du corps pour permettre l'écartement et le rapprochement des mâchoires 8.

La surface extérieure du noyau 4 présente sur chaque mâchoire 8, du côté de la base aplatie 11 et de part et d'autre de la charnière 9, des évidements 13 alternant axialement avec des parties pleines 14. De son côté, le corps 2 présente, de part et d'autre de la rainure 12, des fenêtres 15 adaptées pour recevoir les parties pleines 14 lorsqu'on écarte les mâchoires du noyau 4 positionné à l'intérieur du corps 2.

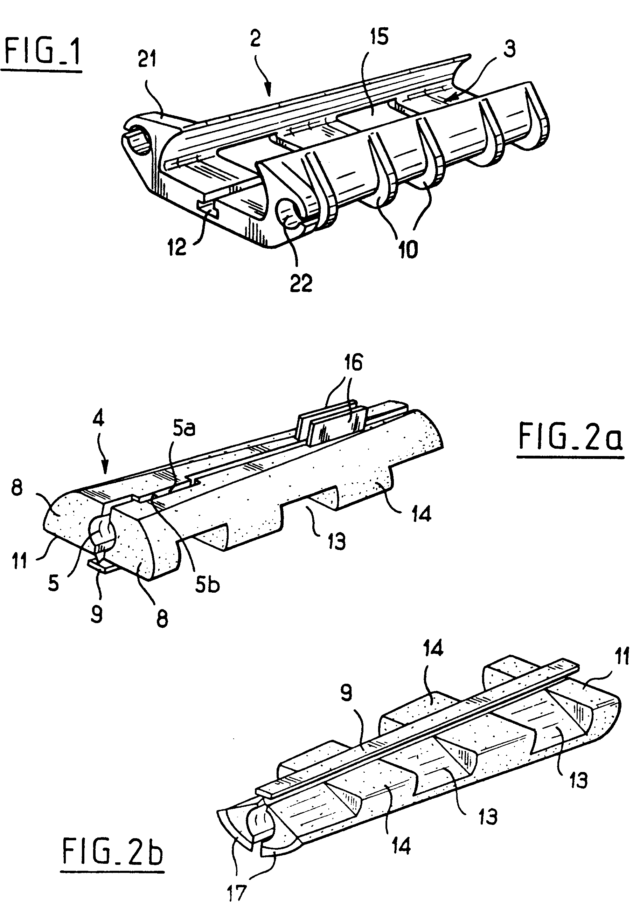

Comme on le voit à la figure 2a, les bords en regard des mâchoires 8 soint découpés selon un profil complémentaire, la partie saillante 5a de l'un des bords s'emboîtant dans une partie rentrante correspondante 5b de l'autre bord. Cette complémentarité de forme évite un décalage axial entre les deux mâchoires, en particulier lorsque le noyau est soumis à des efforts de traction dans le sens longitudinal.

On voit sur la figure 2b qu'il est prévu, à l'extrémité la plus étroite de chaque mâchoire 8, une butée 17 pour limiter le coulissement du noyau 4 à l'intérieur du corps 2, en direction opposée à la traction du câble.

Les différentes parties qui composent le noyau 4, à savoir les mâchoires 8, la charnière 9 et les ailettes 16 constituent un ensemble d'un seul tenant, obtenu par exemple par moulage d'une matière thermoplastique.

De préférence, mais non limitativement, le corps 2 et le noyau 4 sont moulés en polyamide chargé de poudre de verre, ce qui leur assure une grande résistance mécanique. Le corps 2 peut également être réalisé en aluminium.

Pour accrocher un câble électrique en conducteurs isolés torsadés à une paroi au moyen de la pince d'ancrage que l'on vient de décrire, on procède comme suit:

Tout d'abord on fait coulisser le noyau 4, en position fermée c'est-à-dire les ailettes 16 serrées l'une contre l'autre, dans l'évidement 3 du corps 2. Les ailettes 16, serrées, constituent des organes de préhension pour faciliter le coulissement. La complémentarité de forme des deux pièces, noyau et corps, et la glissière constituée par la charnière 9 et la rainure 12 guident le noyau en translation dans le corps et assurent son positionnement correct, les mâchoires 8 devant s'ouvrir du côté de l'ouverture axiale de l'évidement 3. Une fois en place, le noyau 4 est maintenu en translation à l'intérieur du corps 2, par sa forme conique, d'une part, et dans l'autre sens par ses butées d'extrémité 17 qui font saillie à l'extrémité étroite du corps 2.

Le noyau étant maintenu axialement dans la rainure 12, on ouvre les mâchoires 8 en écartant les ailettes 16 qui viennent buter contre les parois latérales du corps 2. Le guidage en rotation des mâchoires 8 dans le corps est rendu possible par la section tranversale cylindrique du noyau 4 et de l'évidement 3. Cette section étant, dans l'exemple de réalisation décrit, aplatie à la base, le guidage en rotation des mâchoires peut néanmoins s'effectuer du fait que les bossages 14 traversent les fenêtres 15 du corps 2.

On place le brin neutre 6 du câble dans l'évidement 5 du noyau 4 et on referme les mâchoires 8 en agissant sur les ailettes 16. Par une légère translation on bloque l'ensemble: les mâchoires 8 sont serrées autour du câble par coincement conique du noyau 4 dans le corps 2 de la pince, de sorte que plus on tire sur le câble, plus on augmente l'effet de coincement. Les bossages 14 du noyau se trouvent légèrement décalés par la translation, par rapport aux fenêtres 15 du corps, ce qui interdit l'écartement des mâchoires 8. Le noyau 4 est ainsi maintenu fermement en position fermée.

On fixe ensuite l'étrier 7 du corps 2 à un crochet, non représenté, scellé dans la paroi choisie pour l'ancrage du câble.

L'effort axial engendré par la traction du câble sur la pince et tendant à faire coulisser le noyau 4 hors du corps 2 est absorbé par la forme conique du noyau. Le corps 2 étant d'un seul tenant, il ne présente pas de joints vulnérables aux efforts de cisaillement. Ces efforts pourraient se traduire par une tendance à l'écartement des parois latérales du corps 2, mais ils sont absorbés par les nervures 10, qui font office de raidisseurs.

La pince d'ancrage selon l'invention allie ainsi d'excellentes qualités de résistance mécanique à une grande simplicité d'assemblage, du fait qu'elle est composée de deux pièces, corps et noyau, qui sont chacune d'un seul tenant. De plus, le double guidage du noyau dans le corps, en translation et en rotation permet de toujours manipuler une pince pré-assemblée. La pince est donc assemblée une fois pour toutes, sans qu'il soit nécessaire d'extraire le noyau du corps à chaque mise en place ou retrait du câble.

L'ouverture axiale du corps permet en outre la mise en place de câbles de différents diamètres, l'écart entre les parois latérales pouvant être relativement important.

Bien entendu, l'invention n'est pas limitée à l'exemple de réalisation que l'on vient de décrire et on peut apporter à celui-ci de nombreuses modifications sans sortir du cadre de l'invention.

Ainsi, la charnière formant coulisseau de guidage pourrait s'étendre sur une partie seulement de la longueur du noyau.

On pourrait également prévoir un noyau parfaitement tronconique que l'on guiderait en rotation autour du câble dans le corps de la pince, de manière à aligner ou à décaler l'ouverture des mâchoires par rapport à l'ouverture axiale du corps, le resserrement des mâchoires étant assuré seulement par le guidage en translation du noyau dans le corps.

## Revendications

1. Pince d'ancrage pour câble électrique, comprenant un corps (2) muni d'un étrier (7) pour sa fixation à une paroi ou analogue et présentant un évidement axial (3) sensiblement tronconique pour le passage du câble (6), l'évidement (3) étant destiné à recevoir un noyau (4) de forme complémentaire propre à réaliser avec le corps (2) un coincement conique, caractérisée en ce que le corps (2) est réalisé d'un seul tenant, avec un évidement (3) ouvert axialement sur l'extérieur à la manière d'une gorge et en ce que des moyens (13, 14, 15, 16) sont prévus pour guider en rotation le noyau (4) positionné à l'intérieur du corps (2), entre une position d'ouverture dans laquelle il peut recevoir le câble (6) et une position de fermeture.

2. Pince d'ancrage conforme à la revendication 1, caractérisée en ce que le noyau (4) est constitué par deux mâchoires articulées (8).

3. Pince d'ancrage conforme à la revendication 2, caractérisée en ce que le noyau (4) présente avec le corps (2) une complémentarité de forme propre à assurer son positionnement dans le corps (2) pour que l'ouverture des mâchoires (8) se fasse du côté de l'ouverture axiale de l'évidement (3).

4. Pince d'ancrage conforme à la revendication 3, caractérisée en ce que le noyau (4) et l'évidement (3) ont une section transversale cylindrique non de révolution, aplatie à la base.

5. Pince d'ancrage conforme à l'une des revendications 2 à 4, caractérisée en ce que les mâchoires (8) portent des organes d'actionnement (16) qui font saillie du corps (2) de la pince lorsque le noyau (4) est positionné dans le corps (2).

6. Pince d'ancrage conforme à l'une des revendications 2 à 5, caractérisée en ce que les deux mâchoires (8) sont articulées par une charnière (9) formant coulisseau et en ce que le fond de l'évidement (3) du corps comporte une rainure axiale (12) formant glissière pour le coulisseau.

7. Pince d'ancrage conforme à la revendication 6, caractérisée en ce que les mâchoires (8) présentent sur leur surface extérieure en contact avec le corps, de part et d'autre de la charnière (9), des évidements (13) alternant axialement avec des parties pleines (14) et en ce que le corps (2) présente des fenêtres (15) adaptées pour recevoir lesdites parties pleines (14) lorsqu'on écarte les mâchoires (8).

8. Pince d'ancrage conforme à l'une des revendications 2 à 7, caractérisée en ce que les bords en regard (5a, 5b) des mâchoires (8) présentent un profil complémentaire assurant leur emboîtement mutuel en position de fermeture.

9. Pince d'ancrage conforme l'une des revendications 1 à 8, caractérisée en ce que le coulissement du noyau (4) à l'intérieur du corps (2), en direction opposée à la traction du câble (6), est limité par une butée (17) prévue sur l'extrémité la plus étroite du noyau (4).

10. Pince d'ancrage conforme à l'une des revendications 1 à 9, caractérisée en ce que la surface extérieure du corps (2) présente des nervures radiales (10).

11. Pince d'ancrage conforme à l'une des revendications 1 à 10, caractérisée en ce que le corps (2) est en polyamide chargé de poudre de verre.
